# EUROPEAN PATENT APPLICATION

(11) **EP 3 677 168 A1**
(43) Date of publication of application: **08.07.2020**
(21) Application number: 18851431.9
(22) Date of filing: 21.08.2018
(51) Int. Cl.: A61B 5/00, G06T 7/00, G01N 33/48

(54) **PATHOLOGY DIAGNOSTIC APPARATUS, IMAGE PROCESSING METHOD, AND PROGRAM**

(30) Priority: 31.08.2017 JP 2017167549
(71) Applicant: Osaka University, Suita-shi, Osaka 565-0871 (JP)
(72) Inventor: MIYOSHI, Eiji, Suita-shi Osaka 565-0871 (JP); KAMADA, Yoshihiro, Suita-shi Osaka 565-0871 (JP); SUZUKI, Takashi, Suita-shi Osaka 565-0871 (JP); ITANO, Keiko, Suita-shi Osaka 565-0871 (JP)
(74) Representative: KATZAROV S.A.
(86) International application number: PCT/JP2018/030758
(87) International publication number: WO 2019/044579

(57) **Abstract**

A pathology diagnostic apparatus (10) includes an image divider (130) that divides an image in which a body part to be diagnosed appears into a plurality of regions based on luminance values of pixels included in the image; a contour extractor (150) that extracts a contour in one region selected from the plurality of regions; a lesion region identifier (170) that identifies a lesion region appearing in the image by using the extracted contour; and a diagnosis result outputter (190) that presents the identified lesion region.

## Description

### [Technical Field]

The present invention relates to a technique used for pathological diagnosis based on an image of a body part to be diagnosed.

### [Background Art]

In pathological diagnosis for judging presence and properties of abnormalities in body tissue, progress of disease, and the like, a biopsy in which a sample created from a tissue surgically collected by puncture, operation, or the like is observed with a microscope is conventionally performed as a highly accurate useful method.

As another judging method, there is a method using a biomarker measured in a biological sample such as blood. Blood collection is useful in that the physical burden on a test subject due to invasion is smaller than that of tissue collection by surgery.

### [Citation List]

### [Patent Literature]

[PTL 1] International Publication No. WO 2012/011579

### [Non Patent Literature]

[NPL 1] Satoshi Suzuki and Keiichi Abe, K., "Topological Structural Analysis of Digitized Binary Images by Border Following", Computer Vision, Graphics, and Image Processing, April 1985, vol. 30, issue 1, pp. 32-46

### [Summary of Invention]

### [Technical Problem]

However, there is a problem in which, depending on disease, it is difficult to find a visual difference which is a criterion for the above judgment in pathological diagnosis, and it is also difficult to accurately share the difference among observers, so judgment is likely to vary depending on skill levels of the observers. Since such a visual difference is delicate, there is also a problem in which the same observer is likely to have a variation in judgment due to conditions or the like of tissue sample making or pathological image capturing.

As a technique for reducing a burden on a doctor who is an observer in the above, there is proposed a technique relating to a method in which a pathological tissue image is divided using its pixel values to obtain a background region, a cytoplasm region, and a cell nucleus region, and features of the pathological tissue image are extracted from region divisional image data indicating those regions (for example, see PTL 1).

However, binarization of an image performed for dividing the image in this method may not be appropriately performed due to extreme smallness or the like of a difference between images of objects in the image or a difference between an image of an object and its background, and as a result, the features of the pathological tissue image may not be appropriately extracted.

In order to use a substance in blood as a biomarker for some disease, as its premise, verification is performed through many cases regarding a correlation between a quantity of the substance and a specific abnormality of a certain tissue. This verification is performed, for example, by statistically analyzing results of blood tests and biopsy results in each case. Then, on the basis of accumulated analysis results, if a reliable correlation between the quantity of the substance and the specific abnormality in the certain tissue is verified, for example, the blood test that measures the quantity of the substance alone can be applied to screening.

However, for a disease about which the doctors' judgment in biopsy is likely to have a variation as described above, the above-described correlation cannot be verified because the accuracy of biopsy results is not sufficient. Therefore, an accurate diagnosis still requires surgical methods that are physically more burdensome and riskier on the test subject. In some cases, surgical methods may not be applicable depending on a medical history of the test subject.

The present invention has been made in view of such problems, and an object is to provide a technique that accurately captures a feature which is difficult to be stably detected by human vision from an image in which a part to be diagnosed appears, and identifies a region of a lesion appearing in the image on the basis of the feature.

### [Solution to Problem]

A pathology diagnostic apparatus according to an aspect of the present invention provided in order to achieve the aforementioned object includes: an image divider that divides an image in which a body part to be diagnosed appears into a plurality of regions based on luminance values of pixels included in the image; a contour extractor that extracts a contour in one region selected from the plurality of regions; a lesion region identifier that identifies a lesion region appearing in the image in which the body part to be diagnosed appears, by using the extracted contour; and a diagnosis result outputter that outputs a diagnosis result based on the identified lesion region.

Furthermore, an image processing method according to an aspect of the present invention provided in order to achieve the aforementioned object includes: dividing an image in which a body part to be diagnosed appears into a plurality of regions based on luminance values of pixels included in the image; extracting a contour in one region selected from the plurality of regions; identifying a lesion region appearing in the image in which the body part to be diagnosed appears, by using the extracted contour; and generating data for presenting the lesion region on the image.

### [Advantageous Effects of Invention]

The present invention accurately captures a feature which is difficult to be stably detected by human vision from an image in which a part to be diagnosed appears, and identifies a region of a lesion appearing in the image on the basis of the feature.

### [Brief Description of Drawings]

[FIG. 1A]

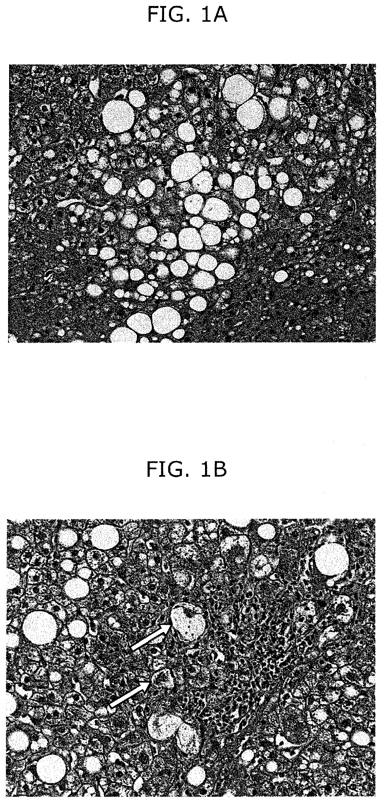

   FIG. 1A is an example of a liver biopsy image in which only fatty metamorphosis is observed.
[FIG. 1B]
   FIG. 1B is an example of a liver biopsy image in which more advanced lesions than the example shown in FIG. 1A are observed.
[FIG. 2]

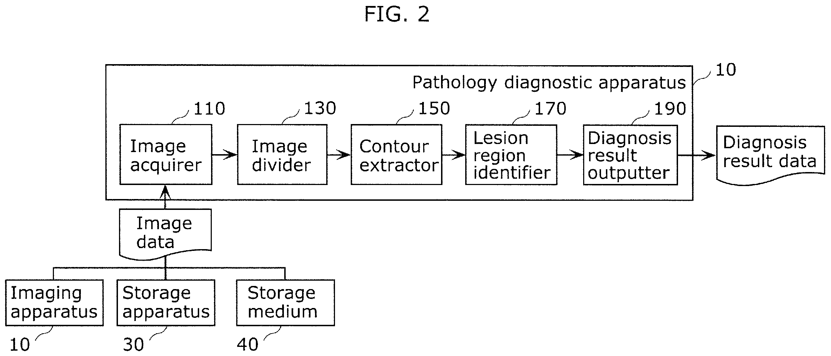

   FIG. 2 is a block diagram showing a configuration of a pathology diagnostic apparatus according to an embodiment.
[FIG. 3]

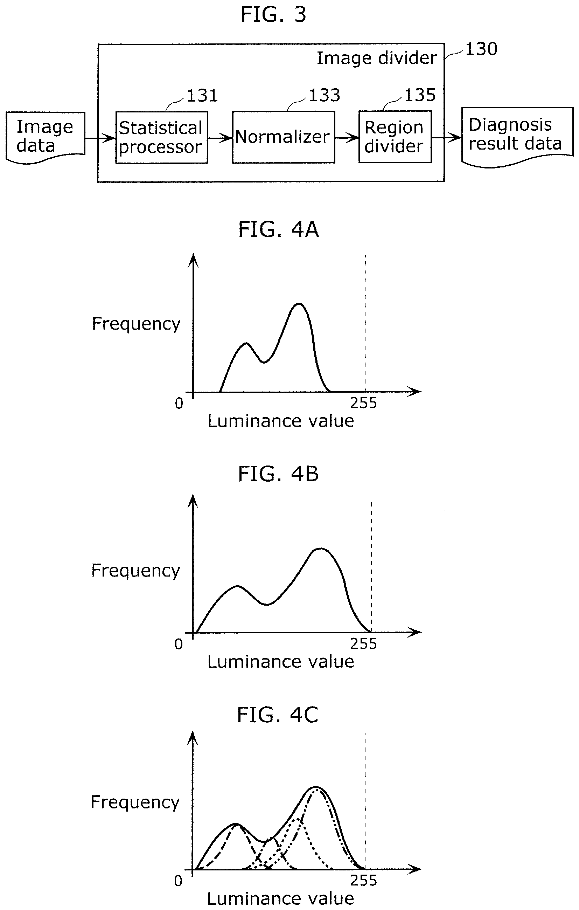

   FIG. 3 is a block diagram showing a functional configuration of an image divider included in the pathology diagnostic apparatus.
[FIG. 4A]
   FIG. 4A is a diagram for illustrating an outline of a frequency distribution normalization process performed by a normalizer included in the image divider included in the pathology diagnostic apparatus.
[FIG. 4B]
   FIG. 4B is a diagram for illustrating the outline of the frequency distribution normalization process performed by the normalizer.
[FIG. 4C]
   FIG. 4C is a diagram for illustrating an application example of Gaussian mixture modeling to a frequency distribution.
[FIG. 5]

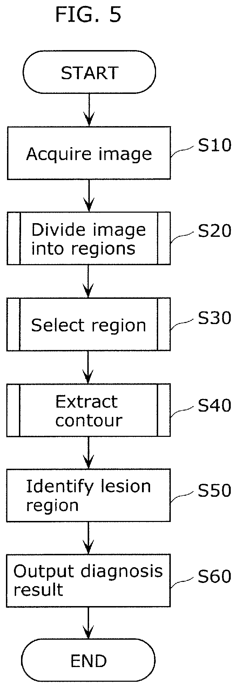

   FIG. 5 is a flowchart for illustrating an example of a procedure included in processing operation from acquisition of an image to output of diagnosis result data by the pathology diagnostic apparatus.
[FIG. 6A]

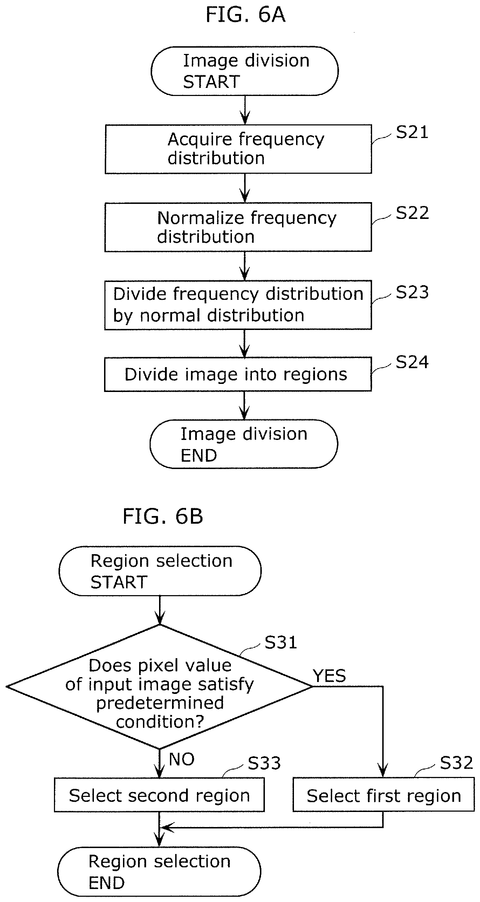

   FIG. 6A is a flowchart for illustrating a procedure example of image division processing by the image divider.
[FIG. 6B]
   FIG. 6B is a flowchart for illustrating a procedure example of region selection by a contour extractor included in the pathology diagnostic apparatus.
[FIG. 6C]

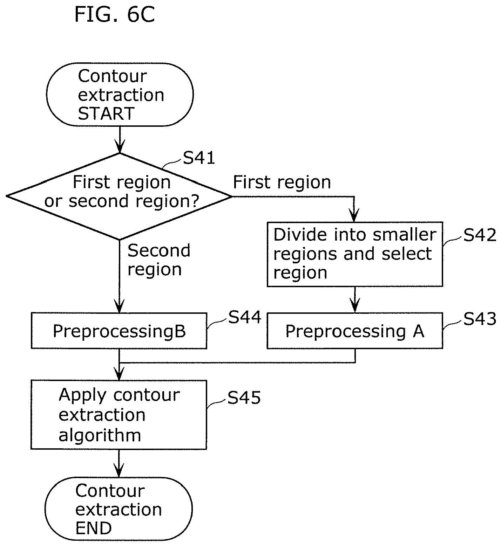

   FIG. 6C is a flowchart for illustrating a procedure example from preprocessing to contour extraction by the contour extractor.
[FIG. 7A]

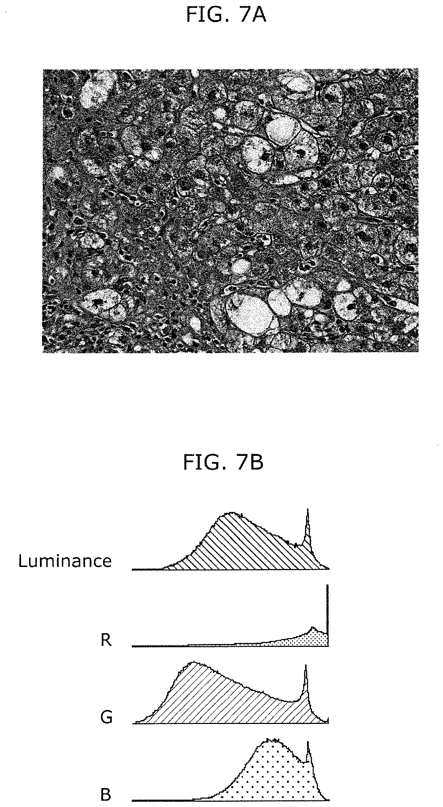

   FIG. 7A is raw image of a liver biopsy image used in an example.
[FIG. 7B]
   FIG. 7B is histograms for the raw liver biopsy image.
[FIG. 8A]

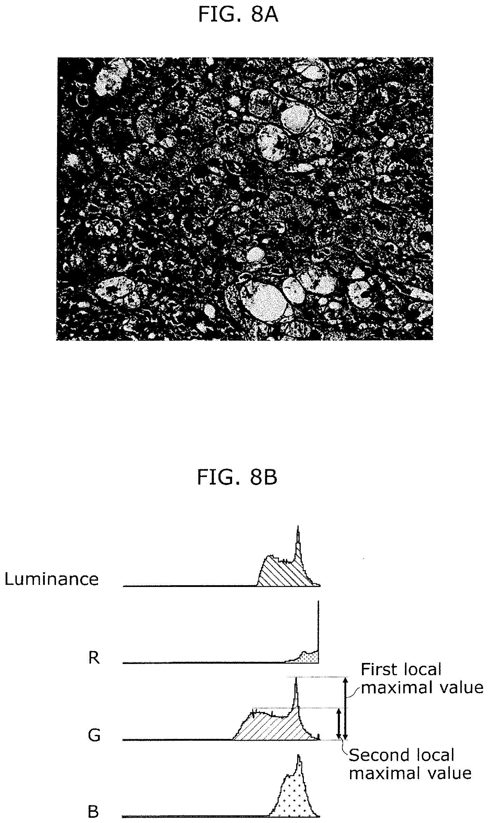

   FIG. 8A is a diagram showing an image showing one of regions obtained by applying Gaussian mixture modeling to the raw liver biopsy image.
[FIG. 8B]
   FIG. 8B is histograms for the image showing one of the regions obtained by applying Gaussian mixture modeling to the raw liver biopsy image.
[FIG. 9A]

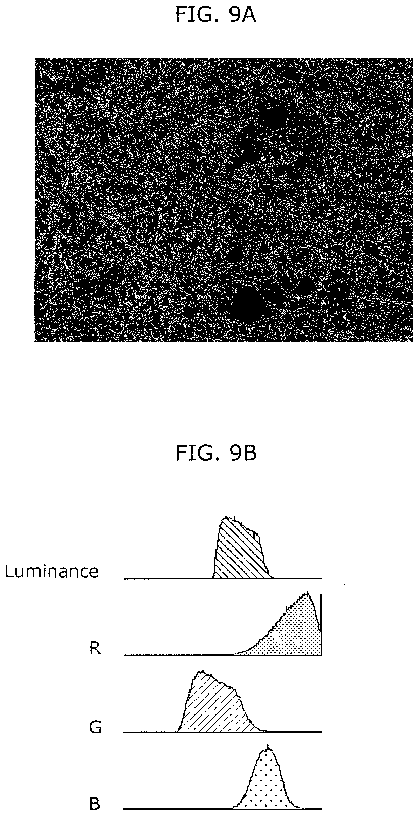

   FIG. 9A is a diagram showing an image showing another one of the regions obtained by applying Gaussian mixture modeling to the raw liver biopsy image.
[FIG. 9B]
   FIG. 9B is histograms of the image showing the other one of the regions obtained by applying Gaussian mixture modeling to the raw liver biopsy image.
[FIG. 10A]

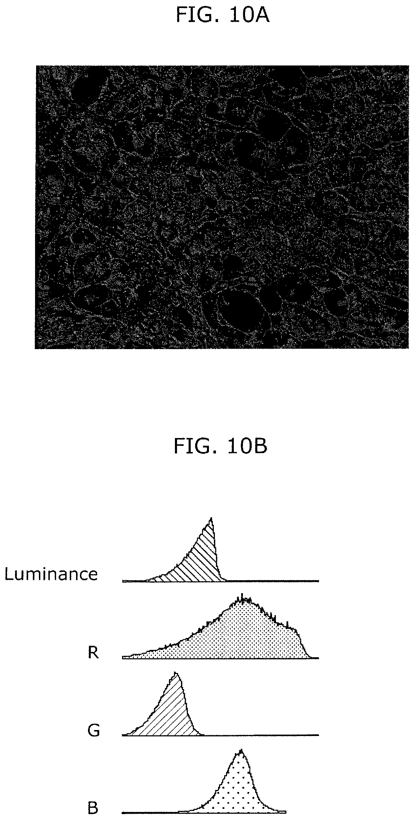

   FIG. 10A is a diagram showing an image showing further another one of the regions obtained by applying Gaussian mixture modeling to the raw liver biopsy image.
[FIG. 10B]
   FIG. 10B is histograms of the image showing the further other one of the regions obtained by applying Gaussian mixture modeling to the raw liver biopsy image.
[FIG. 11]

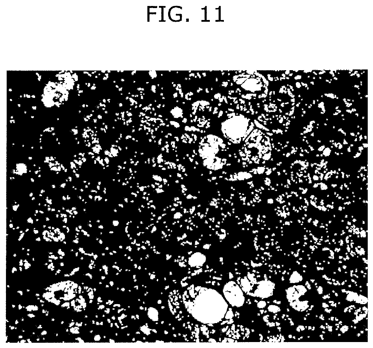

   FIG. 11 is an image obtained as a result of performing opening on an image of one region selected from the plurality of regions of the liver biopsy image in Example 1.
[FIG. 12A]

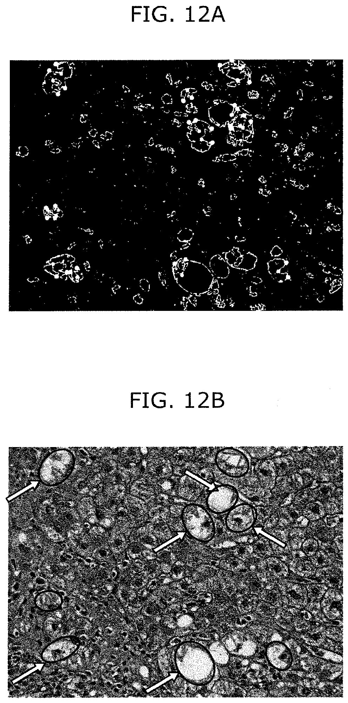

   FIG. 12A is a diagram showing a result of a lesion region identified in Example 1.
[FIG. 12B]
   FIG. 12B is a diagram showing findings of the lesion region by a pathologist.
[FIG. 13A]

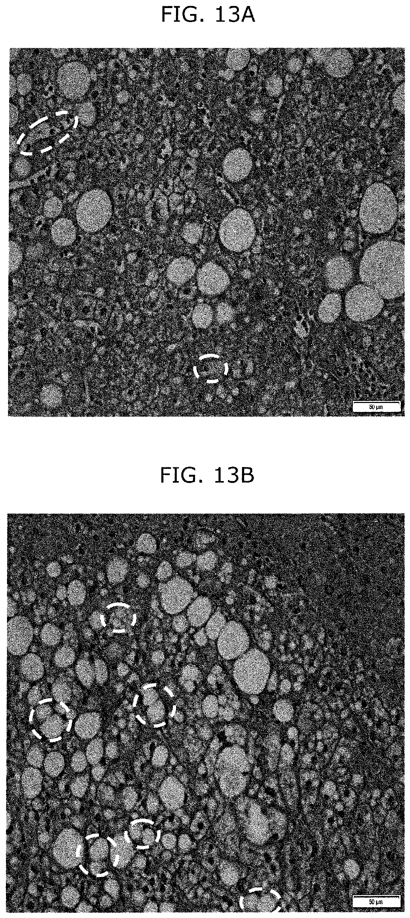

   FIG. 13A is a diagram showing an example of blood vessels excluded using a predetermined condition in Example 2.
[FIG. 13B]
   FIG. 13B is a diagram showing an example of fat droplets excluded using a predetermined condition in Example 2.
[FIG. 14]

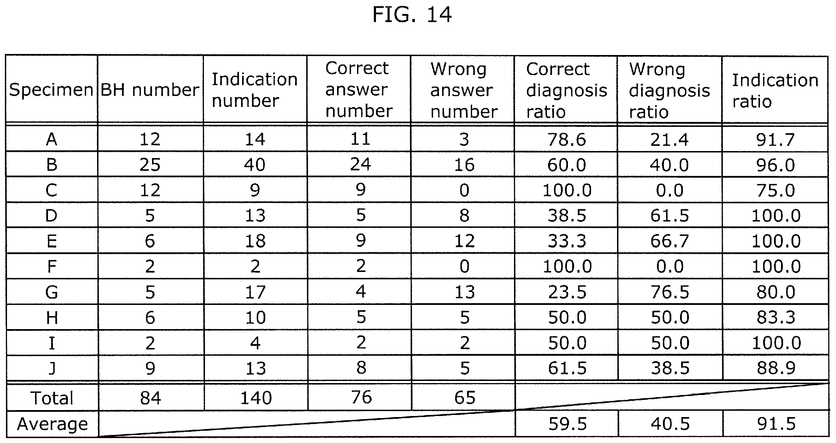

   FIG. 14 shows a determination result of BH performed using a predetermined condition in Example 2.
[FIG. 15A]

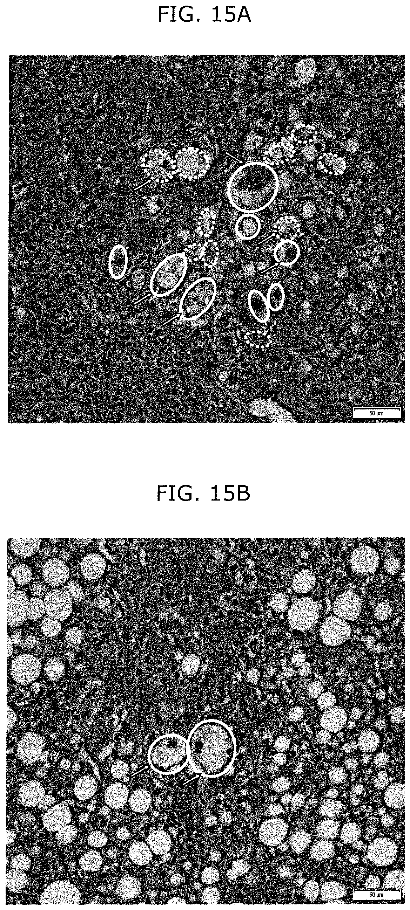

   FIG. 15A shows a determination example of BH performed in Example 2.
[FIG. 15B]
   FIG. 15B shows a determination example of BH performed in Example 2.
[FIG. 15C]

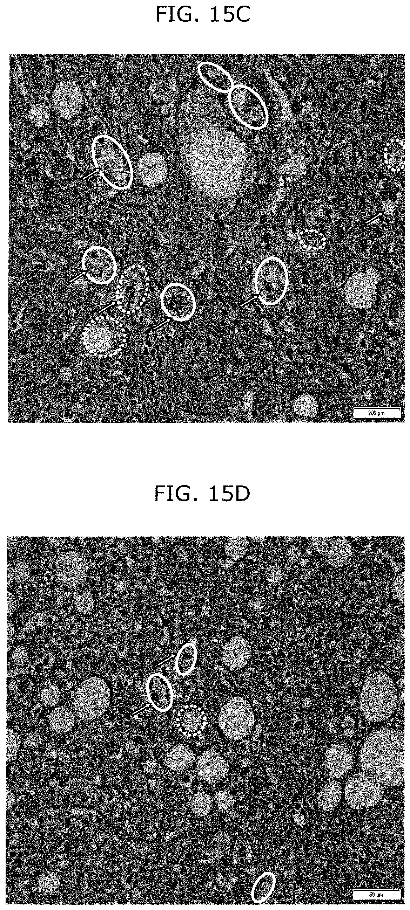

   FIG. 15C shows a determination example of BH performed in Example 2.
[FIG. 15D]
   FIG. 15D shows a determination example of BH performed in Example 2.

### [Description of Embodiments]

### (Findings underlying the present invention)

The present inventors have found that the following problems arise in diagnosis of a disease called non-alcoholic steatohepatitis (hereinafter denoted using an acronym NASH).

Firstly, a fatty liver disease includes an alcoholic fatty liver disease caused by excessive intake of alcohol and a nonalcoholic fatty liver disease (hereinafter denoted using an acronym NAFLD) that occurs in people who have no noticeable drinking history of alcohol. Large drop-like hepatic fat deposition seen on biopsy images is common to both diseases.

Furthermore, there are two types of NAFLD. One is simple fatty liver without tissue inflammation or fibrosis. In this case, many patients are improved by resolving obesity, prognosis is good. The other is the above-described NASH, which involves tissue inflammation and fibrosis and includes progressive cases. In the progressive cases, it can lead to cirrhosis or liver cancer.

The number of NASH patients is estimated to be about 60 million in the world, and about 1 to 2 million, which is comparable to viral hepatitis B or C, in Japan and is increasing.

As a method of treating NASH, in addition to dietary therapy, symptomatic drug treatment is performed when fibrosis is beginning to progress, but there is no approved therapeutic agent for NASH yet.

If diagnosis of NASH in an earlier stage can be made, there is also possibility that progression to fibrosis can be suppressed by diet restriction, exercise habits, administration of drugs, or the like. However, in such an early stage, patients have few subjective symptoms. In addition, a blood test, that is, a diagnostic method based on biomarkers in blood samples, is being studied, but this method alone has not been applied to clinical early diagnosis.

In such a situation, a method conventionally proposed as one of methods of early diagnosis of NASH is to perform a liver biopsy when a blood test and an abdominal echo test show that liver fatty metamorphosis has been progressed to a certain extent or more, and to confirm presence/absence of inflammatory cell infiltration, ballooning hepatocytes, and liver fibrosis seen in the liver of NASH.

However, a problem that still remains here is difficulty in distinguishing a ballooning hepatocyte (hereinafter also referred to as BH) appearing in liver biopsy images. Distinction between a BT and a hepatocyte that has undergone fatty degeneration, which is also found in a simple fatty liver, may differ in findings even among pathologists who have experience at a certain degree or more. For reference, FIG. 1A shows an example of a liver biopsy image in which only fatty metamorphosis is observed as an abnormality, and FIG. 1B shows an example of a liver biopsy image in which more advanced lesions are observed. In the liver biopsy image in FIG. 1A, objects with a rounded and white appearance vertically gathering together around the lateral center of the biopsy image are hepatocytes with fatty degeneration. BHs and inflammatory cells are visible in the liver biopsy image in FIG. 1B, and arrows indicate examples of BHs.

In view of such a situation, the inventors have envisioned an image processing method for identifying a BH image included in a liver biopsy image from data of the liver biopsy image with an accuracy close to distinction by an experienced pathologist.

Hereinafter, an apparatus that executes an image processing method for performing, based on analysis of pathological image data, diagnosis based on a pathological image conventionally performed by an experienced pathologist as described above is described as a pathology diagnostic apparatus according to one embodiment of the present invention.

The present invention is based on the idea of solving the problem of identifying a BH image as described above, and in the following, the embodiment and examples of the invention will be described with a method of identifying a BH image included in a liver biopsy image as an example, but an application range of the present invention is not limited to this. Other applications of the present invention will be described later.

The embodiment described below shows general or specific examples of the present invention. However, numerical values, shapes, materials, components, positions and arrangements and connection forms of the components, and the like indicated in the embodiment are merely examples, and are not intended to limit the present invention. Among the components in the following embodiment, components that are not described in independent claims indicating the highest concept are described as arbitrary components of the present invention.

### (Embodiment)

### [1. Configuration]

FIG. 2 is a block diagram showing a configuration of a pathology diagnostic apparatus according to the embodiment.

Pathology diagnostic apparatus 10 according to the embodiment processes data of an image in which a body part to be diagnosed appears, thereby identifies a lesion region appearing in the image, and outputs a diagnosis result based on the identified lesion region. For example, pathology diagnostic apparatus 10 is implemented as a computer including a storage apparatus (not shown) that stores a program for the processing and an arithmetic processing apparatus (processor, not shown) that executes the program or as an integrated circuit (microcontroller) included in an apparatus or the like dedicated to pathological diagnosis of a target disease.

Pathology diagnostic apparatus 10 includes image acquirer 110, image divider 130, contour extractor 150, lesion region identifier 170, and diagnosis result outputter 190.

Image acquirer 110 acquires an image, in which a body part to be diagnosed appears, to be processed by pathology diagnostic apparatus 10. More specifically, it acquires data of an image (image data) captured and obtained by, for example, imaging apparatus 20.

The image in the embodiment is a biopsy image. For example, it is a microscopic image of a slide sample obtained by fixing, slicing, and staining a tissue collected from a test subject by a surgical method.

The image data is obtained, for example, by taking the microscopic image with a digital camera, which is an example of imaging apparatus 20. Note that imaging apparatus 20 is not particularly limited as long as it can output image data that can be processed by pathology diagnostic apparatus 10, and another example includes an image scanner including a film scanner. Thereby, image data that can be processed by pathology diagnostic apparatus 10 is obtained from a liver biopsy image of a past case captured using a film.

An image to be processed by pathology diagnostic apparatus 10 may be acquired from storage apparatus 30 that stores image data captured and acquired in the past. For example, storage apparatus 30 is a hard disk drive, a solid state drive, or the like included in an external server apparatus. Alternatively, an image may be input into image acquirer 110 from various storage media 40 such as a recordable compact disc or a DVD.

In addition, although not shown in FIG. 2, an image to be processed may be stored in a storage apparatus included in pathology diagnostic apparatus 10 and read from the storage apparatus.

Image divider 130 performs dividing an input image into a plurality of regions (segmentation) by using pixel data on pixels constituting the image. FIG. 3 is a block diagram showing a functional configuration of image divider 130 included in pathology diagnostic apparatus 10.

Image divider 130 includes statistical processor 131, normalizer 133, and region divider 135.

Statistical processor 131 acquires a frequency distribution of appearance frequencies of luminance of pixels from pixel data of the image acquired by image acquirer 110. The luminance of pixels is represented by, for example, an 8-bit value (0 to 255). In this case, statistical processor 131 acquires a 256-class frequency distribution from 0 to 255 based on luminance values of the pixels. Note that the luminance value of each pixel may be directly indicated in pixel data, or may be acquired by calculating (converting) from color values of various pixel values indicated by the pixel data, for example, an R (Red) value, a G (Green) value, and a B (Blue) value. Alternatively, the luminance value of each pixel may be expressed by more gradations such as 16 bits or 32 bits.

Normalizer 133 normalizes the frequency distribution acquired by statistical processor 131. For example, in an execution environment in which the luminance value can take a value from 0 to 255, normalizer 133 extends the entire frequency distribution such that the minimum value of a class in which a frequency is distributed is 0 and the maximum value is 255. FIGS. 4A and 4B are diagrams for illustrating an outline of a frequency distribution normalization process performed by normalizer 133. FIG. 4A shows a schematic diagram of the frequency distribution of the luminance values acquired by statistical processor 131. Note that FIGS. 4A and 4B and FIG. 4C described later show, for convenience, only a continuous function approximating a line connecting vertices of columns of the histogram of the frequency distribution, and illustration of the columns is omitted.

FIG. 4A shows a frequency distribution of luminance values of an image. In this frequency distribution, the minimum value of a class in which a frequency is distributed is larger than 0 and the maximum value is smaller than 255. As a result of extending the entire frequency distribution by the normalization process, the minimum value of the class in which the frequency is distributed becomes 0 and the maximum value becomes 255 as shown in FIG. 4B. Note that extrema of the continuous function are retained before and after normalization. Comparing FIG. 4A with FIG. 4B, for example, it can be seen that the maximum value of the histogram does not change before and after normalization, and peaks formed by the histogram are extended in width while maintaining an original shape to some extent. As a result of this normalization process, contrast of the whole image is emphasized, so a good result can be easily obtained by processing by region divider 135 described later. In addition, when width of a peak of the distribution is narrow, the processing by region divider 135 described later may not be performed well. Since the width of the peak is widened in the normalization process, good results can be easily obtained by the processing by region divider 135.

Note that when the luminance distribution of an image input as a processing object is originally wide, the normalization process by normalizer 133 may be omitted.

Region divider 135 executes region division of the input image on the basis of the frequency distribution after the normalization process by statistical processor 131.

For region division of an image, although various known methods, such as a threshold method, an edge extraction method, and a k-means division method, are available, in the embodiment, region divider 135 uses Gaussian mixture modeling. More specifically, a plurality of Gaussian distributions (normal distributions) are linearly combined while adjusting respective weighting factors, averages, and covariance so as to approximate the continuous function that approximates the histogram of the frequency distribution as described above. FIG. 4C is a diagram for illustrating an application example of Gaussian mixture modeling. In this example, a combination of a plurality of normal distributions indicated by curves of a dashed line, a dotted line, and a chain line is made to approximate a histogram (continuous function approximating a line connecting vertices of the columns) indicated by a solid line. In the present disclosure, modeling a frequency distribution with a plurality of normal distributions in this way is also referred to as dividing a frequency distribution (or its histogram) into normal distributions, which is performed using Gaussian mixture modeling are used.

Next, region divider 135 treats a set (region) of pixels corresponding to each of the plurality of normal distributions as the same region and thereby divides the input image into a plurality of regions. Here, a pixel corresponding to a normal distribution means, for example, a pixel having a value falling within a predetermined deviation of the normal distribution. Specific examples of treating such a set of pixels as the same region include coloring each pixel in different colors depending on the normal distribution to which the pixel corresponds, extracting the pixels corresponding to a specific normal distribution, and processing according to a common rule (or using an algorithm) for the pixels corresponding to the specific normal distribution.

The above-described histogram does not include spatial information (positional information) of each pixel, but reflects information on luminance (or color converted into luminance). It is considered that the information on luminance of each pixel reflects to some extent material composition or structure of the object appearing in the pixel. In other words, the inventors consider that luminance or color can be treated as information reflecting the material or structure of the object. The reason why Gaussian mixture modeling is used for image division in the embodiment is based on an assumption that images of objects of the same or similar material or structure, for example, the same structural objects in a cell are composed of pixels belonging to the same normal distribution among a plurality of normal distributions obtained by dividing the histogram of luminance.

Here, for example, in the above-mentioned threshold method, the pixel value of each pixel is binarized on the basis of a magnitude relationship with a threshold value, and the image is divided into respective binary regions. One of conventionally proposed techniques for setting this threshold value to an optimal value is employed in the method described in PTL 1.

The technique is likely to produce favorable results in dividing of an image with a contrast of a certain degree or higher. However, when a difference between images of objects in an image or between an image of an object and a background is small, the images may fall in the same region. When width of a range in a frequency distribution of pixel values of pixels included in an image of the same object is relatively large and a change in the frequency in that range is relatively small, a set threshold value may fall in the range. Therefore, a possibility is not fully considered that as a result of image division, images of objects appearing in the image, for example, images of structures having different material compositions in a cell may fall in a single region, or images of the same structure may fall in a plurality of regions.

On the other hand, as described above, in Gaussian mixture modeling used in the embodiment, regions of images of objects with a high commonality of material composition or structure are likely to be treated as a single region, and thus regions of images of objects with a low commonality are likely to be treated as different regions. Therefore, the image is more appropriately divided, which means that it is easy to obtain a divisional image corresponding to an object appearing in the image, for example, a divisional image for each structure having a different material composition in a cell in the case of a biopsy image.

Alternatively, in the threshold method, it is possible to obtain an appropriate result of image division by executing a binarization procedure a plurality of times with different settings. For example, in PTL 1, binarized image data is obtained from each of two types of separate data (RGB image data and CIELuv image data) of one image, and regions (cytoplasmic region and background region) for use in a subsequent step are each obtained from each of them. Note that in PTL 1, a third region is further acquired by using NOR operation of two divisional images obtained by the threshold method.

On the other hand, using Gaussian mixture modeling used in the embodiment is efficient because even three or more regions for use in a subsequent step can be directly obtained by one-time image division processing from one type of image data.

More specifically, in Gaussian mixture modeling, the continuous function of the histogram of pixel values (luminance values or color values) of an image to be processed is regarded as a linear combination of a plurality of normal distributions and the histogram is divided into the normal distributions. Weighting factors given to the respective normal distributions in the linear combination correspond to a mixture ratio adjusted among the normal distributions, and the total of all the weight is one.

A set of pixels having pixel values within each of the normal distributions obtained in this way is treated as a single region. These normal distributions do not overlap in the histogram. That is, since one pixel value does not belong to a plurality of normal distributions, each pixel does not belong to a plurality of regions (one pixel does not correspond to two or more normal distributions). Furthermore, there is no gap between normal distributions adjacent in the histogram. Therefore, each and every pixel within one image can be assigned to any one of the regions according to its pixel value by division using Gaussian mixture modeling, and material compositions of structural objects in the images included in the respective regions thus obtained are different from each other with a high probability.

In this process, the number of normal distributions used may be appropriately adjusted so as to obtain a more suitable result according to the purpose of diagnosis.

Data obtained as a result of such image division processing (divided image data) acquired by image divider 130 is input into contour extractor 150.

Contour extractor 150 performs contour extraction processing in one region selected from a plurality of regions indicated by the divided image data input from image divider 130. Contour extractor 150 is implemented by a processor of a computer or an integrated circuit (microcontroller) that reads and executes a program for the processing from a storage apparatus storing the program.

Selection of a region to be subjected to the contour extraction may be performed manually or may be performed by contour extractor 150 on the basis of the pixel values of pixels included in each region. Selection processing by contour extractor 150 is detailed later.

Contour extraction processing may be performed using a known contour extraction algorithm. Examples of such an algorithm include Suzuki85 (see NPL 1).

Contour extractor 150 may further perform dilation, erosion, or closing or opening process each including dilation and erosion for the purpose of emphasizing or deleting a small line or spot appearing in the image as preprocessing of contour extraction. The closing process erases a bright small region included in a dark region. The opening process erases a dark small region included in a bright region. The size of the region to be erased can be adjusted by changing the number of times of dilation and erosion repeated in each of the processes. The contour extracted in the contour extraction processing is a contour of a structure in a cell composed of a cell membrane or the like, or a contour of a structure composed of a protein, saccharide, or the like existing inside or outside a cell. The preprocessing is performed as needed in order to emphasize a structural object used for pathological diagnosis stand out among the other objects or to obscure the other objects.

The divided image data including a result of contour extraction is input to lesion region identifier 170.

Lesion region identifier 170 is also implemented by a processor of a computer or an integrated circuit (microcontroller) that reads and executes a program for specific processing from a storage apparatus storing the program.

Lesion region identifier 170 that has received the divided image data including the result of contour extraction uses the contour extracted by contour extractor 150 to identify the lesion region appearing in the image shown by the image data. The processing of identifying the lesion region by lesion region identifier 170 will be described later using an example.

Data indicating the identified lesion region is input to diagnosis result outputter 190.

Diagnosis result outputter 190 outputs a diagnosis result based on the lesion region identified by lesion region identifier 170 as data (diagnosis result data).

The diagnosis result can be output in various forms. For example, it may be output as data of an image to which a graphic or a symbol indicating a lesion region in an input liver biopsy image of a test subject is added. It may be output as statistical data indicating the number or sizes of lesion regions or the like. Data indicating qualitative information may be output, such as whether or not there is a disease, or necessity of a further test or the severity of the disease (or the degree of progress) if it is possible to further acquire from the information obtained from the image. Such data may be combined for output.

Diagnosis result data may be data in a format used for display or printing for the purpose of viewing, for example, by a doctor or a test subject. In this case, the diagnosis result data output by diagnosis result outputter 190 is input to a display or a printer. The diagnosis result data may be data in a form usable for further processing for other purposes by a computer, for example, statistical analysis, or usable for teacher data for machine learning serving the objective of diagnosis by artificial intelligence. In this case, the diagnosis result data output by diagnosis result outputter 190 is stored in a storage apparatus inside or outside pathology diagnostic apparatus 10.

Such image acquirer 110, image divider 130, contour extractor 150, lesion region identifier 170, and diagnosis result outputter 190 are functional components of pathology diagnostic apparatus 10 implemented by a computer or an integrated circuit, and they are implemented by a processor reading a program from the storage apparatus and executing the program in pathology diagnostic apparatus 10.

Means for implementing such functional components is not particularly limited, and they may be implemented by a processor executing a program obtained by combining, as necessary, a program included in an image processing library of OpenCV and a program described in a programming language, such as C++, on a computer or an integrated circuit on which an operating system, for example, Windows (R), Linux (R), or Android (R), is installed and running. Alternatively, on such a computer or the like, CAE (Computer Aided Engineering) software such as MATLAB may be used, or image processing software having a function corresponding to processing by each component or a program describing processing contents of each component may be used and implemented.

### [2. Operation]

Next, operation of pathology diagnostic apparatus 10 having the above-described configuration will be described. FIG. 5 is a flowchart for illustrating an example of a procedure included in processing operation from acquisition of an image to image processing to output of diagnosis result data by pathology diagnostic apparatus 10.

First, image acquirer 110 acquires an image to be processed (step S10). The image to be processed is as described above, and more specifically, is an image in which a part to be diagnosed appears, and is, for example, a biopsy image.

Next, image divider 130 divides the image to be processed into a plurality of regions on the basis of luminance values of pixels constituting the image (step S20). More detail of the procedure will be described with reference to a flowchart in FIG. 6A. FIG. 6A is a flowchart for illustrating a procedure example of image division processing by image divider 130.

First, statistical processor 131 acquires a frequency distribution of pixels based on pixel information of the acquired image (step S21).

Next, normalizer 133 normalizes the acquired frequency distribution (step S22).

Next, region divider 135 applies Gaussian mixture modeling to the normalized frequency distribution and divides the frequency distribution into a plurality of normal distributions (step S23).

In image divider 130, lastly, region divider 135 divides the image into a plurality of regions by treating pixels corresponding to each of the plurality of normal distributions as a single region (step S24).

Next, contour extractor 150 selects a region from which a contour is to be extracted from the plurality of regions included in the image (step S30). FIG. 6B is a flowchart for illustrating a procedure example of this selection. In this example, it is assumed that regions that are candidates for the contour extraction processing are two regions: a first region and a second region. Note that the first region and second region are regions obtained as results of using the above-described Gaussian mixture modeling and therefore can be distinguished by average luminance (median values) different from each other.

Contour extractor 150 selects either the first region or second region according to, for example, a result of comparing pixel values of pixels constituting the input biopsy image with a predetermined condition (step S31 to step S33).

The predetermined condition used here differs depending on a type or state of a structure having a contour to be extracted in the biopsy image. This is because the structure has an appearance different according to the type or state. Examples of the type or state of the structure that can affect the appearance include a body part from which cells have been collected, a type of processing for making a sample, such as staining, and the result of the processing (for example, how well the sample has taken a dye, in the case of staining), and the degree of progress of disease.

The predetermined condition may be related to, for example, luminance values of the biopsy image, or may be related to any color value if the biopsy image is a color image. More specifically, the predetermined condition is a condition related to a magnitude relationship between various statistics such as a representative value obtained using such a value as sampled data and a predetermined threshold, a magnitude relationship between statistics, or the like. Such statistics are each an example of a feature quantity indicating a feature in the entire biopsy image or in each division region of the biopsy image. Specific examples of feature quantity used under the predetermined condition will be indicated in examples described later.

Next, contour extractor 150 performs contour extraction on the selected region. As described above in the explanation of configuration, preprocessing may be performed further as needed. FIG. 6C is a flowchart illustrating a procedure example when preprocessing is performed. Contour extractor 150 takes different steps before contour extraction depending on whether the selected region is the first region or second region.

In the example shown in FIG. 6C, if the selected region is the first region ("first region" in step S41), the first region is further divided into smaller regions and one of them is selected (step S42). This processing of division may be performed again by image divider 130 in the same method as in step S20. For example, when a structural object having a contour to be extracted and another structural object are relatively similar in material or structure, these structural objects may be included in the same region after only one-time division. In such a case, repeating the image division allows obtaining a region including, with a higher probability, a structural object having a contour to be extracted. Preprocessing A is performed on the selected region (step S43), and thereafter, contour extraction is performed (step S45). Preprocessing A is, for example, the above-described opening.

On the other hand, if the selected region is the second region, preprocessing B is performed on the second region (step S44), and thereafter, contour extraction is performed (step S45). Preprocessing B is, for example, the above-described closing.

Such processing according to the selected region may be performed for the purpose of more reliably extracting the contour of a structure for use in pathological diagnosis or improving the accuracy of subsequent processing on the extracted contour.

Note that the series of procedures shown in FIG. 6C is merely an example, the procedure before the contour extraction algorithm is applied to the region obtained in step S20 is not limited to this. The image division and preprocessing again are performed as necessary as described above. Contents of the preprocessing prior to step S45 may be common regardless of a region selected in according to the condition. The number of alternative regions in step S41 is two or larger, and not limited to two as in the above example. The same applies to the number of regions in step S42.

Next, lesion region identifier 170 uses the extracted contour to identify a lesion region which is a region of a lesion appearing on the pathological image (step S50).

A method for identifying a lesion region by using a contour in a pathological image may be selected from various methods corresponding to changes in cells caused by the lesion. Some examples are described below.

For example, pixel information on pixels in a region defined by a contour may be used. A certain structure is almost homogeneous if there is no abnormality, but contains foreign matter such as impurities if there is an abnormality, and this foreign matter may be different from the structure in color or luminance. The difference in color or luminance may depend on what the foreign matter is. Such foreign matter in a structure may appear in a biopsy image as an image having a different color pixel value or a different luminance value from that of other portions within the contour of the structure. As a specific example, in a liver biopsy image, comparing a liver cell having a fat droplet in a simple fatty liver with a BH, the former is substantially uniform in color inside, whereas in the BH with fibrosis, its internal reserve appears in a different color. That is, hepatocytes of the simple fatty liver and BHs at risk for future progress in liver biopsy images can be distinguished and identified using the variance of pixel values that vary depending on the presence/absence or amount of such different colored pixels within the contour of the cell. In step S30, the structure, for example, a region where a certain type of cells appear in the biopsy image is selected, in step S40, the contour of the structure is extracted, and then in step S50, if a value indicating the variance of pixel values of the pixels included in the contour of the structure exceeds a predetermined threshold value, the region defined by the contour may be identified as a lesion region. This threshold value is an example of an eighth threshold value in the embodiment.

Depending on a type of lesion to be identified, a tissue to be tested, or the like, an average of pixel values may be used instead of the variance of pixel values, and a region defined by a contour may be identified as a lesion region by comparing the number or proportion of pixels having pixel values of a particular color within the region defined by the contour are higher or lower with a predetermined threshold value.

For example, a feature relating to a shape of the contour may be used. A certain structure has a shape with almost equal height and width if there is no abnormality, but if there is an abnormality, it may deform and take on an elongated shape, or it may look elongated due to an effect of foreign matter increased inside due to the abnormality. In such a case, for example, a circumscribed ellipse of the extracted contour of the structure is calculated, and when the ratio of the minor axis to the major axis (aspect ratio) of the circumscribed ellipse is smaller than or equal to a predetermined threshold value, the region defined by the contour may be identified as a lesion region. This threshold value is an example of a first threshold value in the embodiment.

As another example of such a method for identifying the lesion region on the basis of the circumscribed ellipse, both the extracted contour of the structure and the circumscribed ellipse may be used. A certain structure has a shape close to a perfect circle when there is no abnormality, whereas if there is an abnormality, it deforms and takes on a distorted shape, or it may look distorted due to an effect of foreign matter increased inside due to the abnormality. In such a case, for example, when the ratio of area of the region defined by the contour to the area of the circumscribed ellipse is smaller than or equal to a predetermined threshold value, the region defined by the contour may be identified as a lesion region. This threshold value is an example of a seventh threshold value in the embodiment.

Alternatively, such distortion of the shape of the structure may be determined on the basis of a distance from the circumscribed ellipse to the contour in the biopsy image, and a lesion region may be identified according to the result. For example, for the extracted contour of a certain structure, when pixels on the contour include more than a predetermined number of pixels whose distance from pixels on the circumscribed ellipse exceeds a predetermined threshold, the region defined by this contour may be identified as a lesion region. The predetermined threshold relating to the distance is an example of a second threshold value in the embodiment. Alternatively, when pixels on this contour include more than a predetermined proportion of pixels whose distance from pixels on the circumscribed ellipse exceeds a predetermined threshold, the region defined by this contour may be identified as a lesion region. The predetermined threshold relating to the distance is an example of a third threshold value in the embodiment.

Here, the predetermined number or predetermined proportion described above may be a fixed value or may be a value adjustable manually by a user such as a pathologist or automatically by pathology diagnostic apparatus 10. The user or pathology diagnostic apparatus 10 changes the value to a value suitable for observation for diagnosis according to, for example, magnification of the pathological image or specifications of imaging apparatus 20 or image data (the number of pixels, bit depth, or the like).

Regarding the determination based on the distance from the circumscribed ellipse to the contour therein, in addition to the above examples, the ratio of the distance to the major axis, minor axis, or perimeter of the ellipse may be used. That is, on the basis of whether the conditions are satisfied, such as whether a ratio of this distance to the major axis of the circumscribed ellipse exceeds a predetermined threshold (an example of a fourth threshold value), whether a ratio of this distance to the minor axis of the circumscribed ellipse exceeds a predetermined threshold (an example of a fifth threshold value), or whether the ratio of this distance to the perimeter of the circumscribed ellipse exceeds a predetermined threshold (an example of a sixth threshold value), the region defined by the contour may be identified as a lesion region. The higher such a ratio is, the more likely it is for the shape of the structure to be distorted compared to its circumscribed ellipse.

Instead of or in addition to the distance from the circumscribed ellipse to the contour therein, the distance between the center of the circumscribed ellipse and the centroid (geometric center) of the region defined by the contour therein may be used.

Although in the above, the circumscribed ellipse of the extracted contour of the structure is used for the determination regarding the feature of the shape of the structure, instead of the circumscribed ellipse, a convex hull of a set of all points on the contour (hereinafter simply referred to as convex hull of the contour) may be used. Also when the convex hull is used, the deformation of the shape of the structure is determined on the basis of a ratio of size in a traverse direction (minor axis) to size in a longitudinal direction (major axis) of the convex hull, a distance between the convex hull and the contour therein, a ratio of the distance to the major axis, minor axis, or perimeter of the convex hull, an area ratio of the convex hull to the contour, a distance between geometric centers of the convex hull and contour, or the like, in the same manner as the case of the circumscribed ellipse. Such a circumscribed ellipse and convex hull are examples of circumscribed figures of the contour in the embodiment.

Although in the identification of the lesion region exemplified so far, the determination of the lesion region based on numerical values such as variance, ratio, number, or proportion is made, if it is determined to be a lesion region, the severity of the lesion to be used as an index of progress of the disease may be further identified. For example, these numerical values may be used as a score of a continuous value or a discrete value indicating the severity of the lesion, and also may be used for a basis of classification of the lesion. Alternatively, instead of the determination like binary classification of whether or not the region is a lesion region, likelihood of being a lesion region may be evaluated on a three-point or larger scale based on these numerical values.

Although eight conditions for identifying a lesion region, each including any one of the first threshold value to the eighth threshold value, have been exemplified in the above, these conditions may be used either individually or in combination. In addition, when two or more of the conditions are used in combination, they may be used as OR conditions in which any one of them needs to be satisfied, or may be used as AND conditions in which all of them must be satisfied.

As an example of the latter, the determination of whether the region is a lesion region or the evaluation of the possibility of a lesion region may be made on the basis of whether both a condition regarding color of the region defined by the contour, that is, the variance, average, or the like of pixel values, and a geometric condition regarding the shape or area of the region defined by the contour or its circumscribed figure are satisfied.

Note that the combination of conditions is not limited to a combination of a condition regarding color and a geometric condition, and may be a combination of conditions regarding color or a combination of geometric conditions. For example, the determination of whether the region is a lesion region or the evaluation of the possibility of a lesion region may be made on the basis of whether two or more conditions regarding the shape of the contour are satisfied.

On the basis of information relating to the lesion region identified in this way, diagnosis result outputter 190 outputs the information as data suitable for the purpose of use with modification added as necessary (step S60).

### [3. Modification]

The configuration and operation of pathology diagnostic apparatus 10 according to the embodiment are not limited to the above description. There are modifications of the embodiment still within the technical scope of the present invention, and some examples thereof will be described below.

For example, a part which is not a lesion region in the biopsy image may be identified using the above various conditions. For example, in the process of identifying the lesion region by lesion region identifier 170 (step S50), a region satisfying a condition regarding pixel values or a predetermined geometric condition may be excluded from a region to be identified as a lesion region. As a more specific example, a region composed of pixels in which the variance of pixel values of a specific color is less than a predetermined threshold value, or a region including pixels satisfying this condition more than a predetermined proportion may be excluded from a region to be specified as a lesion region. Thus, for example, when identifying a lesion region of hepatocytes in a selected region, it is possible to exclude a region of an image of a structure other than hepatocytes, such as an interstice tissue or a blood vessel, which is mixedly present in the selected region. As another example, a determination may be made based on the length of the major axis or minor axis of the contour of a structure or its circumscribed figure. For example, even in structures of the same kind, there is a case where a specific tendency is observed in size of a normal cell and a diseased cell. For example, normal hepatocytes most have a major axis of 10 µm or shorter, whereas abnormal hepatocytes that include foreign matter and have swollen tend to be larger. In such a case, a threshold value of, for example, 15 µm may be set and hepatocytes may be identified as not a lesion region if the major axis is smaller than this threshold value, even if the condition of the lesion region relating to color, shape, or area is satisfied.

By using a combination of such conditions, a portion that may be a lesion region and a region that is not a lesion region in the biopsy image are identified with higher accuracy, leading to improvement in examination accuracy. For example, a region divided based on pixel values in step S20 may contain a structure that has an appearance similar to a lesion region but is not a lesion region, which can be called noise. A possibility that a region including such a structure is erroneously identified as a lesion region is therefore suppressed.

The above operation includes the procedure in which pixel values of the biopsy image or a divisional region thereof are compared with a predetermined condition as a determination object. The pixel values may be subjected to the normalization process as necessary before the determination involving such comparison with the predetermined condition.

The example of the procedure of the above operation includes region division further performed on the selected one region. This region division may be performed using Gaussian mixture modeling again or another method among the various region division methods as exemplified above.

In the above, the contents of the preprocessing performed prior to contour extraction by contour extractor 150 are changed depending on whether the selected region is the first region or second region. The determination method of the contents of preprocessing is not limited to this. For example, it may be determined on the basis of various statistics of pixel values of the selected region such as variance value of the frequency distribution of the luminance values. As another example, it may be determined on the basis of an area ratio of the selected region to a non-selected region or the entire biopsy image.

A criterion for determining the contents of preprocessing in these examples is preliminarily selected on the basis of a change in appearance that may occur due to a lesion in an image of a part to be tested appearing in the biopsy image. More specific example of the change in appearance include increase in variation in luminance values of the image with progress of fibrosis of tissue , and decrease in the area ratio of the first region mainly including images of cytoplasm to the second region mainly including images of fibers. The contents of preprocessing are determined such that, for example, when the first region is selected and the variance of luminance values therein is smaller than or equal to a predetermined value, opening is performed on the first region as preprocessing. Alternatively, they may be determined based on a plurality of changes in appearance. For example, the determination may be made such that if the variance of the luminance values of the first region exceeds a predetermined value and the area ratio of the first region to the second region exceeds a predetermined value, the first region is further divided, and among regions obtained by this division, opening is performed on a region having a higher average luminance.

It is thereby possible to more appropriately extract the contour of a target structure that appears in the input image or the selected region thereof.

Such changes can be determined in advance, for example, by obtaining knowledge of a pathologist or the like. Further, the contents of preprocessing may be determined based on two or more of these changes.

In the above, the process from the selection of a region to the preprocessing performed prior to contour extraction by contour extractor 150 may be executed as a process after the dividing process by image divider 130. That is, it needs to be performed after the image is divided into a plurality of regions and before the contour extraction is performed. Note that as described above, contour extractor 150 and lesion region identifier 170 are functional components implemented by execution of a program by the arithmetic processing apparatus in pathology diagnostic apparatus 10 and the above-mentioned assignment of each step as an operation to each component is for convenience of explanation. The present invention is intended to include the steps assigned differently from the above as long as the assignment is reasonable. The same applies to assignment of steps among all functional components including image acquirer 110, image divider 130, and diagnosis result outputter 190.

The order of steps of the operation is not limited to the above, and may be changed as long as it is reasonable, and a change may be made in each step as appropriate for the changed order. For example, the selection of a region need not be performed prior to the extraction of the contour, and the steps up to contour extraction or lesion region identification may be performed for all the regions. The selection of a region may then be performed based on results of contour extraction or lesion region identification in the regions. The selection may be postponed in this manner when criteria for selecting a region containing one or more structures used as an object for a lesion at a higher proportion are not determined specifically enough, or when pathological diagnosis is performed on a pathological image including exceptional image information.

### [4. Example 1]

Next, an example of pathology diagnostic apparatus 10 according to the embodiment will be described. In this description, pathology diagnostic apparatus 10 will be exemplified using a case of a diagnosis regarding the presence/absence of a sign of NASH from a liver biopsy image, which is the basis for conception of the present invention. In the following example, a library included in OpenCV was used for statistical processing, normalization, region division, contour extraction, and chipping detection, and programs described in C++ prepared by the inventors were used in combination with the library as necessary.

FIG. 7A is a raw image of a liver biopsy image used in the example, and FIG. 7B shows histograms of the raw image. Note that the actual raw image was a color image that was stained with hematoxylin and eosin in a process of preparation of a sample. FIG. 7B shows histograms of the luminance, R value, G value, and B value of the raw image in order from the top.

Images shown in FIGS. 8A, 9A, and 10A are obtained by applying Gaussian mixture modeling to the liver biopsy image by image divider 130 (step S20), and histograms of the luminance, R value, G value, and B value of the images are shown in FIGS. 8B, 9B, and 10B, respectively.

FIG. 8A shows an image of the first region having the highest average luminance, which is an image mainly showing a region corresponding to cytoplasm (hereinafter also referred to as cytoplasm region image). FIG. 9A shows an image of the second region having the next highest average luminance, which is an image mainly showing a region corresponding to fibers or a fiber-like structure such as actin (hereinafter also referred to as fiber region image). FIG. 10A shows an image of the third region having the lowest average luminance, which is an image mainly showing a region corresponding to a cell nucleus.

Hematoxylin and eosin stain stains the cell nuclei blue-purple with hematoxylin. In addition, cytoplasm and fibers are stained with eosin at different densities from red to pink depending on the type of structural object differentiated by material or structure. Such different staining results depending on the type of structural object were advantageously used to divide the image into regions corresponding to the structural objects using Gaussian mixture modeling.

Next, the inventors caused contour extractor 150 to select an image used as an object for contour extraction from these three images obtained as a result of division (step S30).

Diagnosis relating to NASH is made based on whether or not hepatocytes that have undergone fatty degeneration show characteristics indicating a sign of NASH as a BH. As degeneration progresses, BHs become more clear and more rounded to be conspicuously swollen compared to normal hepatocytes. Therefore, extracting the contour of a cell or its main structure from the cytoplasmic region image is potentially a promising option.

However, as NASH progresses, fibrosis of liver tissue progresses, and when the progress reaches a certain degree, BHs start to contain granular aggregates composed of part of fibers. It is known to experienced pathologists that the aggregates may render the shape of hepatocytes appearing to be chipped compared to an original rounded shape in a planar view in the biopsy image. By taking advantage of this point, if there is a possibility that NASH has progressed to some extent, there is also a possibility that better results may be obtained by performing contour extraction on the fiber region image. That is, if it is possible to determine whether to use either the image of the first region or the image of the second region using a certain condition, the diagnosis can be performed more efficiently.

Here, the inventors examined liver biopsy images of a large number of cases, and empirically found one method for grasping a proportion of fiber images in the cytoplasmic region image, which increases as fibrosis progresses, from image information. The inventors derived the method from a tendency seen in the ratio of two local maximal values in frequency distributions of B values in the first region.

The tendency is that when the two local maximal values are set as a first local maximal value with a higher gradation value and a second local maximal value with a lower gradation value (see FIG. 8A), in the case where fibrosis has not progressed, the second local maximal value is smaller than the first maximal value, whereas the ratio of the second local maximal value to the first local maximal value is larger for fibrosis in a more advanced stage. This is thought to be a tendency caused by the fact that the stained fibers contain mainly a blue component having a lower gradation than the cytoplasm, as also seen in the histograms of FIG. 9B.

In the example, the inventors caused contour extractor 150 to select the fiber region image as an image from which a contour was to be extracted when a ratio of the second local maximal value to the first local maximal value in the B value distribution is larger than a threshold value 0.55. In the case of this example, since this ratio was less than 0.55, the cytoplasmic region image, that is, the image of the first region, was selected as the image from which the contour was to be extracted.

Opening was performed on the selected cytoplasmic region image by contour extractor 150 as preprocessing of the contour extraction processing. FIG. 11 is an image obtained by performing the opening on the image of the first region in FIG. 8A. Dark spots in brighter regions were eliminated from the image of FIG. 8A.

Next, contour extractor 150 applied the Suzuki85 algorithm to the image of the first region already subjected to the opening, and performed contour extraction (step S40).

Next, the inventors caused lesion region identifier 170 to execute a process of identifying a lesion region (step S50).

The inventors caused lesion region identifier 170 to calculate a circumscribed ellipse of each of the extracted contours, calculate a ratio of the area of the region defined by the contour to the area of the circumscribed ellipse, and treat the contour as a candidate contour of BH if the ratio is smaller than or equal to a threshold value 0.970. The threshold value 0.970 is an example of the seventh threshold value in the example, which was empirically obtained by the inventors.

The inventors caused lesion region identifier 170 to calculate a ratio of the minor axis to the major axis of the above-described circumscribed ellipse, and treat the contour as a candidate contour of BH if the ratio is smaller than or equal to a threshold value 0.999. The threshold value 0.999 is an example of the first threshold value in the example, which was empirically obtained by the inventors.

The inventors caused lesion region identifier 170 to treat the contour as a candidate contour of BH if a value indicating variance of pixel values of pixels included in the contour exceeds a threshold value 0.43. The threshold value 0.43 is an example of the eighth threshold value in the example, which was empirically obtained by the inventors.

Next, the inventors caused lesion region identifier 170 to narrow down the candidate contours of BH by picking up contours that satisfy all of the three conditions each including the first, seventh, or eighth threshold values.

Next, for each of the candidate contours of BH, the inventors caused lesion region identifier 170 to obtain a distance between the contour and its convex hull as a distance between the contour and its circumscribed figure. Although various methods to obtain this distance are conceivable, the distance calculated in the example was a distance from a straight line connecting both ends of a segment of the extracted contour where the contour deviated from the convex hull and inwardly depressed, to a farthest point of the segment. Then, the inventors caused lesion region identifier 170 to determine a contour for which the calculated distance exceeds a predetermined threshold as the contour of BH. This region defined by the contour is the lesion region identified by lesion region identifier 170.

FIG. 12A is a diagram showing a result of a lesion region identified in this way. In addition, FIG. 12B is a diagram showing findings by a liver pathologist who read the raw image. In the image of FIG. 12A, contours extracted by contour extractor 150 appear. Of the contours, regarding the one that was identified as the contour of BH by lesion region identifier 170, the ends of a segment of a contour where the contour deviates inward from the convex hull are each indicated by a triangular symbol, and a point farthest from the straight line connecting both ends is indicated by a cross symbol. Such a line or each symbol is an example of signs used for presenting a feature for use in pathological diagnosis or an identified lesion region on the image.

On the other hand, in the image showing the findings by the liver pathologist in FIG. 12B, images of cells corresponding to the lesion region identified by lesion region identifier 170 is shown by ellipses on the raw image input to pathology diagnostic apparatus 10 in the example. Also, with no reference to the identification result of pathology diagnostic apparatus 10, cells determined to be BHs by the liver pathologist who read the raw image are indicated by arrows.

As can be seen from FIGS. 12A and 12B, although lesion region identifier 170 identified some cells not determined by the liver pathologist to be BHs as BHs, all the cells that the liver pathologist determined to be BHs were also identified as BHs by lesion region identifier 170.

The inventors performed a determination of BH on 31 liver biopsy images using pathology diagnostic apparatus 10 in the same manner as in the above example, and compared results of the determination with the findings by the liver pathologist. In all the 31 cases, cells determined to be BHs by pathology diagnostic apparatus 10 included 45 of 51 cells determined to be BHs by the findings of the liver pathologist, and the true positive rate was about 88.2%.

### [5. Example 2]

In this example, using pathology diagnostic apparatus 10, in a liver biopsy image, BH candidates were identified using conditions relating to a shape or area ratio between an extracted contour and its circumscribed figure, and among the BH candidates, final BH identification was performed for candidates having a major axis of 15 µm or longer by using conditions to exclude blood vessels or fat droplets. The identification of BH candidates was performed in the following two stages.
(Stage 1) Identification based on chipping or dents in the circumscribed figure of the contour
(Stage 2) Identification based on the area ratio

Note that the inventors knew at the time of execution that the method used in Stage 1 could be done quickly but was likely to miss BHs in the identification, compared to the method used in Stage 2, and the method used in Stage 2 was unlikely to miss BHs in the identification but likely to wrongly determine normal cells and the like to be BHs.

For the exclusion of blood vessels, the following conditions were used in combination.

Ratio of area of the region defined by the contour to area of the circumscribed figure: < 0.799
Aspect ratio of the circumscribed figure: < 0.72
Pixel value of the region within the contour: 0.15 < R <0.29, 0.40 < G, and B < 0.29

The parameters included in these conditions are values empirically obtained by the inventors.

FIG. 13A is a diagram showing an example of images of blood vessels detected and excluded from the liver biopsy image by using the above-described conditions. Note that the actual processing was performed on a color liver biopsy image. In the figure, images of blood vessels excluded as a result are indicated by two dashed ellipses surrounding the images of blood vessels.

In addition, the following five types of conditions (or a combination of conditions) were used to exclude fat droplets.
(Condition 1) Combination of conditions for reliably excluding regions that are fat droplets
   Ratio of area of the region defined by the contour to area of the circumscribed figure: < 0.970
   Aspect ratio of the circumscribed figure: < 0.910
(Condition 2-1) Combination of conditions for excluding a region of two clinging fat droplets
   Ratio of the area of the region defined by the contour to the area of the circumscribed figure: < 0.80
   Aspect ratio of the circumscribed figure: < 0.60
(Condition 2-2) Condition for excluding a region that is two fat droplets that are attached to each other
   Variance value of R < 0.29
(Condition 3) Combination of conditions for excluding a region of three clinging fat droplets
   Ratio of the area of the region defined by the contour to the area of the circumscribed figure: < 0.72
   Aspect ratio of the circumscribed figure: < 0.70
   Variance of red value of a region within the contour < 0.22
(Condition 4) Combination of conditions for excluding a region of one fat droplet other than the above.
   Ratio of the area of the region defined by the contour to the area of the circumscribed figure: < 0.90
   Aspect ratio of the circumscribed figure: < 0.770
   Variance of red value of a region within the contour < 0.29
(Condition 2-2) and the combination of (Condition 2-1) were applied to those that did not meet (Condition 1), the combination of (Condition 3) was further applied to those that did not meet any of (Condition 2-2) and the combination of (Condition 2-1), and the combination of (Condition 4) was further applied to those that did not meet (Condition 3). The parameters included in the conditions are values empirically obtained by the inventors.

FIG. 13B is a diagram showing an example of images of fat droplets detected and excluded from the liver biopsy image by using the above-described conditions. Note that the actual processing was performed on a color liver biopsy image, and in the figure, images of fat droplets excluded as a result are indicated by six dashed ellipses surrounding the images of fat droplets.

FIG. 14 illustrates a determination result of BH performed using those conditions. In the table, "BH number" denotes the number of BHs pointed out by the liver pathologist in the liver biopsy image. "Indication number" denotes the number of BHs pointed out by pathology diagnostic apparatus 10 using the above conditions. "Correct answer number" denotes the number of BHs that are also pointed out by the liver pathologist among BHs pointed out by pathology diagnostic apparatus 10, and "wrong answer number" denotes the number of cells which the liver pathologist diagnosed as not BH among BHs pointed out by pathology diagnostic apparatus 10. "Correct diagnosis ratio" denotes the correct answer number / indication number, "wrong diagnosis ratio" denotes the wrong answer number / indication number, and "indication ratio" denotes the correct answer number / BH number.

FIGS. 15A, 15B, 15C, and 15D are liver biopsy images of specimens E, F, H, and I listed in the table of FIG. 14, respectively, and show examples of determination of BH. In each of FIG. 15A to FIG. 15D, each solid circle represents a region of BH identified in both Stage 1 and Stage 2, each dotted circle represents a region of BH identified in Stage 2 only, and each arrow indicates a BH which the liver pathologist pointed out by visual observation performed separately.

As can be seen from these figures, pathology diagnostic apparatus 10 identified 90% or more of the BHs pointed out by the liver pathologist.

Looking at each case of the specimens, the wrong diagnosis ratio for specimen E was high. However, according to the liver pathologist, for specimen E, a slightly brighter region located across about two-thirds from the upper end of the right half or more of the image is a region where cells almost becoming BHs form a group. In other words, it can be said that a wrong answer for this region is close to a correct answer, or that cells at a place where the liver pathologist should watch closely for a future change to BHs were identified.

The case of specimen F is a good example in which the result obtained in both Stages 1 and 2 were equivalent to those given by the liver pathologist.

The cases of specimens H and I showed relatively good results in identifying what the liver pathologist pointed out, but included wrong answers among what were identified in both Stages 1 and 2. In this regard, it is possible to reduce the wrong diagnosis ratio in the future by obtaining new conditions or more appropriate parameters by collecting more cases. Specimen I is an example shown in FIG. 13A in which the images of blood vessels were excluded. Even in the region once identified as BH in Stage 1 or Stage 2, the number of wrong answers was reduced as a result of the exclusion of the blood vessel images.

### [6. Other Embodiment]

In Example 1 described above, the three conditions are used for determining the contour of BH, but it is not essential to the present invention to use the three conditions in combination.

It is considered that, by collecting many cases using pathology diagnostic apparatus 10 according to the above-described embodiment, more appropriate parameters used for processing performed prior to contour extraction and more appropriate values of thresholds included in determination conditions are obtained, and thereby it is possible to make a determination with a similar degree of accuracy using fewer conditions. Note that the above values of thresholds are merely examples. It goes without saying that different values will be used when the present invention is applied to pathological diagnosis of other diseases, and different threshold values may be used also in the pathological diagnosis of NASH.

Among the conditions described in the embodiment, conditions not used in the examples described above can also be used for diagnosis related to NASH. For example, in some cases, determination regarding BH based on only a distance between an extracted contour of cytoplasm and its convex hull or circumscribed ellipse showed high accuracy.

In the above-described embodiment and examples, the circumscribed ellipse and convex hull are exemplified as circumscribed figures, but a circumscribed figure other than the circumscribed ellipse or convex hull, such as a regular polygon circumscribing the extracted contour, may be used. The figure to be used is determined depending on a shape of a cell or structure to be observed for diagnosis in a normal state or a state in which a lesion has occurred.

In the above example, the selection of a region from which a contour is to be extracted is performed based on the distribution of the blue component in the image of the first region, but the present invention is not limited to this. The inventors found in the liver biopsy cell image that the green component has a significant tendency to correlate with the degree of fibrosis although the correlation is not as high as that of the blue component. Therefore, a local maximal value of the green component in the cytoplasm region image can be used as a criterion for selecting the region, and may be used together with the blue component.

Other numerical values derived from the frequency distribution may be used. For example, when a certain frequency distribution of pixel values has multiple peaks, a region from which a contour is to be extracted may be selected based on a ratio of area of the peaks within a range of a predetermined variance.

A region may be selected based on a plurality of pixel values. For example, a determination may be made using the above conditions for at least two or more of the luminance value and RGB color values, and a region may be selected based on a combination of the results. The region may be selected based on a ratio of area of frequency distributions of two pixel values, a magnitude relationship between the maximum values, or the like.

When the present invention is applied to pathological diagnosis of a disease other than NASH, pixel values, statistics (feature quantities) such as a local maximal value, and threshold values used as criteria for selecting a region may be different from each of the above-described examples depending on the type of a lesion occurring in a tissue to be diagnosed, the type of staining solution for use in preparation of samples, or the like, and also in the pathological diagnosis of NASH, color values, feature quantities, or the like different from the above-described examples may be used as criteria.

The numerical values used as criteria for selecting a region are not limited to those obtained from the first image as in the above-described examples. Any of the feature quantities based on the pixel values of each region may be used, or numerical values derived from a plurality of feature quantities may be used.

In the above example, the region is selected using one feature quantity regarding the B value of the entire raw image of the biopsy image, but numerical values derived from a plurality of feature quantities regarding a plurality of pixel values of the entire original image may be used. Although a highly accurate selection is possible by a selection method using feature quantities based on pixel values of each region, if only a process of dividing the biopsy image takes a long time, it may be used as a simple selection method that does not further require obtaining a feature quantity in each region.

The signs and symbols seen in each image shown in FIGS. 12A and 12B may be included in the diagnosis result output from diagnosis result outputter 190. For example, an image indicated by the image data output from diagnosis result outputter 190 may be an image in which, on the raw pathological image, a sign indicating a feature in the image for use in pathological diagnosis, such as the contour lines or the symbol seen in the image of FIG. 12A are superimposed. Alternatively, an identified lesion region may be presented using a graphic superimposed on the raw pathological image, such as the circle or the arrow seen in the image of FIG. 12B. The image may be output as a video in which displaying/hiding of the lines, symbols, or graphics superimposed on the original pathological image can be switched by user operation. As the image presented to the user, an image obtained by adjusting brightness, color tone, contrast, or the like may be used as appropriate instead of the raw pathological image.

From such an image, for example, the pathologist who is a user can easily grasp a cell in which a lesion has occurred or a cell having a high probability thereof and use it for reference of their diagnosis. The pathologist may further adjust parameters used in each process in pathology diagnostic apparatus 10 by looking at the image. Thereby, the user can obtain a more appropriate pathological diagnosis image suitable for each case from pathology diagnostic apparatus 10.

### [7. Effects]

Pathology diagnostic apparatus 10 according to the embodiment includes image divider 130, contour extractor 150, lesion region identifier 170, and diagnosis result outputter 190.

Image divider 130 divides an image in which a body part to be diagnosed appears into a plurality of regions on the basis of luminance values of pixels included in the image.

Contour extractor 150 extracts a contour in one region selected from the plurality of regions.

Lesion region identifier 170 uses the extracted contour to identify a lesion region appearing in the image.

Diagnosis result outputter 190 outputs a diagnosis result based on the identified lesion region.

Thereby, a feature that is difficult to be stably detected by human vision is accurately captured from the image in which the part to be diagnosed appears, and the lesion region appearing in the image is identified on the basis of the feature. The identified lesion region is presented in a form usable for diagnosis by a user such as a pathologist.

For example, lesion region identifier 170 may calculate a circumscribed figure of the extracted contour and identify the lesion region on the basis of the circumscribed figure.

Inside and outside cells, there are structures whose shape changes according to the presence/absence or severity of a lesion. By analyzing the shape of such a structure appearing in a pathological image on the basis of such a circumscribed figure, the lesion region can be identified.

As a specific example, when the ratio of the minor axis to the major axis of the circumscribed figure is smaller than or equal to the first threshold, lesion region identifier 170 may identify a region defined by the contour as a lesion region.

Thus, the lesion region is identified on the basis of the shape of the structure or the like having an aspect ratio close to 1:1 if normal.

In some cases, it is not possible to specify a longitudinal direction and a lateral direction of the circumscribed figure, but in the present disclosure, in such a case, one of the diameters is treated as the major axis and the other as the minor axis for convenience.

As another specific example, lesion region identifier 170 may identify the lesion region on the basis of a distance from the circumscribed figure to the extracted contour therein.

Thereby, the lesion region is identified on the basis of the degree of deformation of the specific structure.

More specifically, lesion region identifier 170 may identify the region defined by the contour as a lesion region if any of the following conditions are satisfied for the extracted contour:
(Condition 1) the contour includes more than a predetermined number of the pixels for which the distance to the circumscribed figure exceeds the second threshold value;
(Condition 2) the contour includes more than a predetermined proportion of the pixels for which the distance to the circumscribed figure exceeds the third threshold value;
(Condition 3) the ratio of the distance to the circumscribed figure to the perimeter of the circumscribed figure exceeds the fourth threshold;
(Condition 4) the ratio of the distance to the circumscribed figure to the major axis of the circumscribed figure exceeds the fifth threshold value; or
(Condition 5) the ratio of the distance to the circumscribed figure to the minor axis of the circumscribed figure exceeds the sixth threshold.

Using any of the conditions, a determination is made as to the magnitude of a difference between the shapes of the extracted contour and circumscribed figure or, in other words, as to whether a structure from which the contour has been extracted is deformed more than a certain degree. The lesion region is thereby identified on the basis of the degree of deformation of a specific structure.

If the ratio of area of the region defined by the extracted contour to its circumscribed figure is smaller than or equal to the seventh threshold, lesion region identifier 170 may identify the region defined by the contour as a lesion region.

Using this condition, it is determined whether deformation of the shape of the structure exceeds a certain degree on the basis of a difference between the area of the region defined by the extracted contour and the area of its circumscribed figure. The lesion region is thereby identified on the basis of the degree of deformation of a specific structure.

The circumscribed figure may be a convex hull or a circumscribed ellipse of the extracted contour.

Thus, for example, it is determined whether there is a dent in the contour of the structure, and if so, the presence/absence or severity of a lesion of the structure is determined on the basis of the size of the dent. In the above examples, the determination as to whether the hepatocyte was a BH was made using the cytoplasmic contour of a hepatocyte and its convex hull .

Note that in the present disclosure, "ellipse" is used as a word of a concept including a perfect circle.

Furthermore, lesion region identifier 170 may identify a region defined by the contour as the lesion region when a value indicating variance of pixel values of pixels included in the region defined by the extracted contour exceeds an eighth threshold value.

Using this condition, for example, a determination is made as to whether a structure containing impurities due to a predetermined disease contains the impurities more than a certain proportion. The lesion region is thereby identified on the basis of the amount of impurities contained in a specific structure.

Furthermore, image divider 130 may divide a frequency distribution of appearance frequencies of the luminance values of the aforementioned image into a plurality of normal distributions using Gaussian mixture modeling and treat a set of pixels corresponding to each of the normal distributions as the same region to divide the image into the plurality of regions.

A single image is thereby divided into a plurality of regions each mainly including a structural object having material or structure different from that of the other regions.

Furthermore, the aforementioned image may be a color image, and contour extractor 150 may select any one of the plurality of regions based on appearance frequencies of gradation values of pixels of a predetermined color which form a first region or a second region of the color image obtained by division by image divider 130, and extract the contour from the selected region.

A region more suitable for contour extraction is thereby selected on the basis of image information on a structure that changes depending on the presence/absence or degree of a lesion.

As a more specific example, when the plurality of regions include the first region and the second region lower in average luminance than the first region, and a frequency distribution of the appearance frequencies includes a first local maximal value and a second local maximal value that is a local maximal value at a lower gradation value than the first local maximal value, contour extractor 150 may select the first region as an object for extracting the contour when a ratio of the second local maximal value to the first local maximal value is smaller than or equal to a predetermined threshold value. Furthermore, contour selector 150 may select the second region as an object for extracting the contour when the ratio of the second local maximal value to the first local maximal value is larger than the predetermined threshold value.

A lesion may increase the amount of a certain material in the first region although the material would be contained mainly in a structure that appears in the second region if the lesion were not present. In such a case, if the amount of the material contained in the first region exceeds a certain amount, it is possible to switch the region from which a contour is to be extracted such that a contour is extracted from the second region is used instead of the first region when the lesion is not advanced yet.

Although in the above-described embodiment, the present invention has been described by taking the pathology diagnostic apparatus as an example, the present invention can also be implemented as an image processing method including a procedure for image processing among the processes executed in the pathology diagnostic apparatus. Furthermore, the present invention can also be implemented as a program that causes an arithmetic processing apparatus (processor) included in a general-purpose computer or a microcontroller of a dedicated pathology diagnostic apparatus to perform each processing procedure performed in pathology diagnostic apparatus 10. The above effects can be obtained also by the method or program.

In the above embodiment and examples, the present invention is implemented as an apparatus or the like for performing pathological diagnosis using a biopsy image, and it is described as a problem solver that solves a problem in which stable diagnosis is difficult depending on the experience of a diagnostician, a sample making process, or conditions such as imaging.

Here, since the present invention can utilize accumulated past pathological images as resources, it is useful not only in clinical practice but also in research.

If diagnosis results using pathological images and diagnosis results by blood tests for the same case are available for a certain amount, there is a possibility that biomarkers more reliable and usable for earlier screening may be discovered by statistically finding correlations between these results. As a result, it is possible to reduce the need for surgical biopsy tissue collection whose physical burden and risk to test subjects are higher than blood drawing. Furthermore, the present invention makes it possible to perform screening for a disease using only blood with high accuracy even along with another disease, even if conventional screening for the disease requires a special test, thus contributing to a public health promotion.

### [8. Others]

The present invention has been specifically described in connection with the pathological diagnosis of NASH so far, but the disease to which the present invention can be applied is not limited to NASH. For example, there is considered application to various diseases such as dilated cardiomyopathy and other diseases that cause cell degeneration accompanied by fibrosis, diseases such as colorectal polyps that may be transferred to cancer, or diseases that are difficult to distinguish from cancer. The pathology diagnostic apparatus according to the present invention captures characteristics, such as shapes, luminance, and color, of cells or structures inside and outside the cells which are not easily recognized by the human eye in biopsy images of such diseases, and enables early and accurate diagnosis.

When the technique of the present invention is newly applied to a certain disease as described above, the original image of a biopsy image or pixel information (luminance, RGB values, and their histograms) of each region obtained by dividing the original image by the image divider can be used for conditions used for identifying a lesion region and threshold values included in the conditions.

More specifically, by statistically analyzing features of statistics derived from the pixel information and the medical history and medical condition of a patient of the case of the biopsy image and finding a correlation between them, a statistic of image information that is highly relating to the presence/absence or degree of progress of a lesion is identified. Then, contents of conditions and threshold values relating to this statistic are derived from many cases. The conditions and their threshold values empirically obtained and used by the inventors in the above examples are also derived in this manner.

An example of using such features includes a case where the number of pixels (region area) in which a pixel value (luminance value and each color value of RGB) of each region obtained by dividing the original image is one or more, and the extrema, mode, standard deviation of the frequency distribution of pixel values, and area or skirt width of the whole or a part of the histogram are used as feature quantities. Further, these feature quantities for the original image may be used. For example, the inventors also obtained the skirt width of the histograms of the B value and G value of the cytoplasmic region and original image in the process of examining the conditions and their threshold values used for the pathological diagnosis of NASH.

### [Industrial Applicability]

The present invention can be used as a pathology diagnostic apparatus or an image processing method for accurately identifying a feature of a lesion that is difficult to be stably detected by human vision from an image in which a part to be diagnosed appears, and a program for implementing the pathology diagnostic apparatus.

### [Reference Signs List]

- 10: Pathology diagnostic apparatus
- 20: Imaging apparatus
- 30: Storage apparatus
- 40: Storage medium
- 110: Image acquirer
- 130: Image divider
- 131: Statistical processor
- 133: Normalizer
- 135: Region divider
- 150: Contour extractor
- 170: Lesion region identifier
- 190: Diagnosis result outputter

## Claims

1. A pathology diagnostic apparatus, comprising:
an image divider that divides an image in which a body part to be diagnosed appears into a plurality of regions based on luminance values of pixels included in the image;
a contour extractor that extracts a contour in one region selected from the plurality of regions;
a lesion region identifier that identifies a lesion region appearing in the image by using the contour; and
a diagnosis result outputter that outputs a diagnosis result based on the identified lesion region.

2. The pathology diagnostic apparatus according to claim 1, wherein the lesion region identifier calculates a circumscribed figure of the contour, and identifies the lesion region based on the circumscribed figure.

3. The pathology diagnostic apparatus according to claim 2, wherein the lesion region identifier identifies a region defined by the contour as the lesion region when a ratio of a minor axis to a major axis of the circumscribed figure calculated for the contour is smaller than or equal to a first threshold value.

4. The pathology diagnostic apparatus according to claim 2, wherein the lesion region identifier identifies the lesion region based on a distance from the circumscribed figure to the contour.

5. The pathology diagnostic apparatus according to claim 4, wherein the lesion region identifier identifies a region defined by the contour as the lesion region when any of following conditions are satisfied for the contour:
(Condition 1) the contour includes more than a predetermined number of pixels for which the distance exceeds a second threshold value;
(Condition 2) the contour includes more than a predetermined proportion of pixels for which the distance exceeds a third threshold value;
(Condition 3) a ratio of the distance to a major axis of the circumscribed figure exceeds a fourth threshold;
(Condition 4) a ratio of the distance to a minor axis of the circumscribed figure exceeds a fifth threshold value; or
(Condition 5) a ratio of the distance to a perimeter of the circumscribed figure exceeds a sixth threshold.

6. The pathology diagnostic apparatus according to claim 2,
wherein the lesion region identifier identifies a region defined by the contour as the lesion region when a ratio of area of the region defined by the contour to area of the circumscribed figure is equal to or smaller than a seventh threshold value.

7. The pathology diagnostic apparatus according to any one of claims 2 to 6, wherein the circumscribed figure is a convex hull or a circumscribed ellipse of the contour.

8. The pathology diagnostic apparatus according to claim 1,
wherein the lesion region identifier identifies a region defined by the contour as the lesion region when a value indicating variance of pixel values of pixels included in the region defined by the contour exceeds an eighth threshold value.

9. The pathology diagnostic apparatus according to any one of claims 1 to 8,
wherein the image divider:
divides a frequency distribution of appearance frequencies of the luminance values into a plurality of normal distributions using Gaussian mixture modeling; and
treats a set of pixels corresponding to each of the normal distributions as a same region to divide the image into the plurality of regions.

10. The pathology diagnostic apparatus according to claim 9,
wherein the image is a color image, and
the contour extractor selects any one of the plurality of regions based on appearance frequencies of gradation values of pixels of a predetermined color which form a first region or a second region of the color image obtained by division by the image divider, and extracts the contour from the selected region.

11. The pathology diagnostic apparatus according to claim 10,
wherein the plurality of regions include the first region and the second region lower in average luminance than the first region,
a frequency distribution of the appearance frequencies includes a first local maximal value and a second local maximal value that is a local maximal value at a lower gradation value than the first local maximal value, and
the contour extractor:
selects the first region as an object for extracting the contour when a ratio of the second local maximal value to the first local maximal value is smaller than or equal to a predetermined threshold value; and
selects the second region as an object for extracting the contour when the ratio of the second local maximal value to the first local maximal value is larger than the predetermined threshold value.

12. An image processing method, comprising:
dividing an image in which a body part to be diagnosed appears into a plurality of regions based on luminance values of pixels included in the image;
extracting a contour in one region selected from the plurality of regions;
identifying a lesion region appearing in the image by using the contour; and
generating data for presenting the lesion region on the image.

13. A program that causes a processor to execute:
dividing an image in which a body part to be diagnosed appears into a plurality of regions based on luminance values of pixels included in the image;
extracting a contour in one region selected from the plurality of regions;
identifying a lesion region appearing in the image by using the contour; and
outputting a diagnosis result based on the identified lesion region.
